Europäisches Patentamt

European Patent Office

Office européen des brevets

(11) Veröffentlichungsnummer: **0 183 643**
**A1**

(12) **EUROPÄISCHE PATENTANMELDUNG**

(21) Anmeldenummer: 85810491.2

(22) Anmeldetag: 28.10.85

(51) Int. Cl.⁴: **G 01 N 1/20**
**G 01 N 27/04**

(30) Priorität: 28.10.84 CH 5118/84

(43) Veröffentlichungstag der Anmeldung:
04.06.86 Patentblatt 86/23

(84) Benannte Vertragsstaaten:
AT BE CH DE FR GB IT LI LU NL SE

(71) Anmelder: Thalmond Anstalt
Gempa-Haus Birkenweg 6
FL-9490 Vaduz(LI)

(72) Erfinder: Gröninger, Kurd G., Dr.-Ing.
Breitenstrasse 11
CH-5415 Nussbaumen(CH)

(74) Vertreter: Hediger, Bernhard
Weidächerstrasse 94
CH-8706 Meilen(CH)

(54) **Anordnung zur Messung der Wasseraktivität in kontinuierlichen oder chargenweisen Prozessen.**

(57) Zur Messung der Wasseraktivität an Schüttgütern oder sonstigen Feststoffen (2) in einem kontinuierlichen oder chargenweisen Prozess mittels eines Feuchtefühlers (8) ist eine Anordnung im Nebenzweig des Prozesses dringendst empfohlen. Die Anordnung besteht im wesentliche aus einem Sammelkanal (3), der auf einem Messzylinder (6) steht. Das Messgut (2) wird mit zwei exzentrisch anget-riebenen Fördergabeln (4) im Sammelkanal (3) und mit einem verschiebbaren Kolben (7) im Messzylinder (6) homogen verteilt am Feuchtefühler (8) entlang geführt. Ein Abschlussdeckel (12) am konischen Ende (9) des Messzylinders (6) bewirkt eine weitere Homogenisierung des Messgutes (2).

Fig. 1

EP 0 183 643 A1

Anordnung zur Messung der Wasseraktivität

in kontinuierlichen oder chargenweisen Prozessen

Die Erfindung betrifft eine Anordnung zur Messung der Wasseraktivität an Schüttgütern oder sonstigen Feststoffen nach dem
Oberbegriff des Patentanspruchs 1.

Aus der Praxis der Feuchtemessung sind viele verschiedene Feuchtefühler bekannt. Die Messung der Wasseraktivität an Schüttgütern
oder sonstigen Feststoffen wird bei allen bekannten Herstellern
im Hauptzweig eines Prozesses vorgenomen. Es wurde jedoch bis
anhin nicht erkannt, dass die Güte der mit dem Feuchtefühler gemessenen Wasseraktivitäten stark vom Messort abhängig ist. Einschlägige Untersuchungen an kontinuierlichen Prozessen, wie z.B.
an einem Trommel-Futtermitteltrockner haben erwiesen, dass die
einzig richtige Messtelle in einem Nebenzweig des Prozesses angeordnet werden muss. Der Grund liegt darin, dass auch bei einem
relativ gleichmässigen Prozess wie der Trocknung, bei der das
Trocknungsgut in Würfel gepresst wird, das Messgut zu wenig homogen verteilt ist, um eine zuverlässige und reproduzierbare Messung der Wasseraktivität zu bewirken. Bei den Wasseraktivitätsmessungen direkt im Prozess können sogar bei den gleichen Messbedingungen unterschiedliche Resultate erhalten werden, was den
Zweck der Messung vollkommen hinfällig macht.

Die Erfindung stellt sich deshalb die Aufgabe, mit den bekannten
Feuchtefühlern eine zuverlässige und reproduzierbare Messung der
Wasseraktivität an Schüttgütern oder sonstigen Feststoffen zu ermöglichen.

Diese Aufgabe wird erfindungsgemäss gelöst durch die Merkmale des
Patentanspruchs 1.

Die Erfindung beruht auf der Erkenntnis, dass für eine zuverlässige Wasseraktivitätsmessung nicht nur die Güte des Feuchtefühlers ausschlaggebend ist, sondern auch die Güte der Messtelle einen entscheidenden Einfluss auf das Messresultat hat. Dazu muss stets eine homogene Verteilung sowie ein gleichmässiger Transport des Messgutes gewährleistet sein. Wie eingangs erwähnt, kann dies nur erreicht werden in einem Nebenzweig des kontinuierlichen oder chargenweisen Prozesses, in welchem die Homogenisierung des Messgutes bewusst vorgenommen wird.

Die erfindungsgemässe Messanordnung hat den enormen Vorteil, dass sie klein bemessen ist, um eine genaue Wasseraktivitätsmessung zu erhalten. Es braucht deshalb nur ein kleiner Teil des Schüttgutes oder des Feststoffes abgezweigt zu werden. In einer Trocknungsanlage ergibt sich z.B. täglich etwa ein Eimer voll Messgut. Die Fördergabel im Sammelrohr und das konisch ausgebildete Ende des Messzylinders verhindern, dass das Messgut sich festsetzt, auch bei besonders feuchten Materialien. Dies ist mit von Bedeutung für einen wirtschaftlichen Energieverbrauch der Trocknungsanlage. Der Abschlussdeckel am Ende des Messzylinders trägt zusätzlich zur Homogenisierung des Messgutes bei.

Weitere Vorteile der Erfindung ergeben sich aus der nachfolgenden Beschreibung. Dort wird die Erfindung anhand eines in der Zeichnung dargestellten Beispieles näher erläutert. Dabei zeigt:

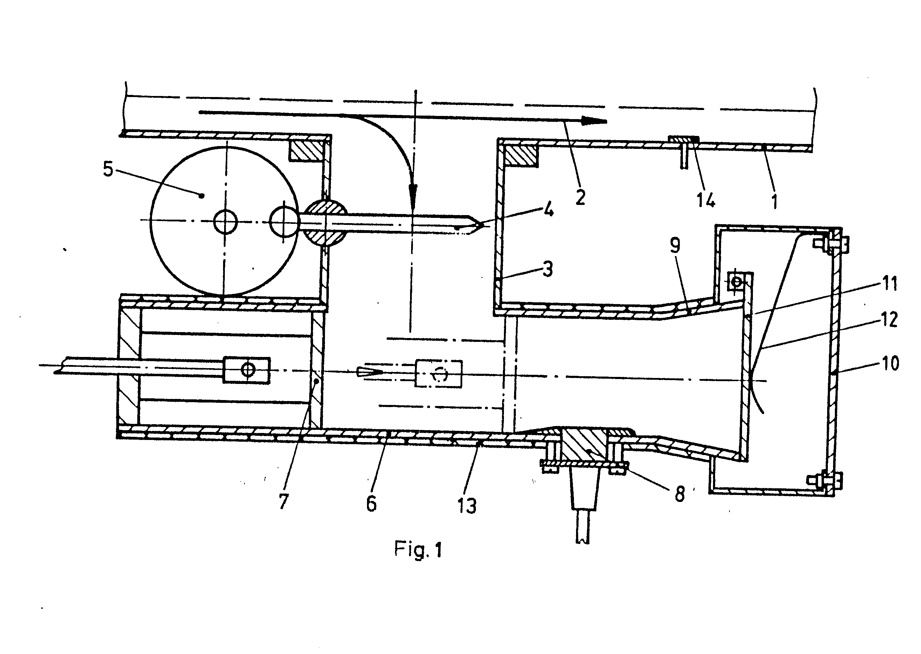

> Fig.1 eine Anordnung zur Wasseraktivitäts-
> messung an Schüttgütern.

Die in Fig. 1 gezeigte Anordnung ist als Nebenzweig eines kontinuierlichen Prozesses vorgesehen. Von einem Hauptzweig 1 des Prozesses wird ein kleiner Teil eines Schüttgutes oder sonstigen Feststoffes 2 (das Messgut) in einen Sammelkanal 3 abgezweigt. Zwei Fördergabeln 4 im Sammelkanal 3 sorgen dafür, dass das Messgut 2 sich nicht festklemmt. Sie werden von einem exzentrischen Antrieb 5 hin und her bewegt, welcher aus einer von einem Elektromotor angetriebenen Kreisscheibe mit einer exzentrischen Befestigung für die Fördergabel 4 besteht. Sodann fällt das Messgut in einen Messzylinder 6, auf dem der Sammelkanal 3 steht. Ein Kolben 7 im Messzylinder 6 verschiebt das Messgut 2 zu einem Feuchtefühler 8 hin, hier einer Kombination aus einem Leitfähigkeits-Feuchtefühler und einem Temperaturfühler. Der Feuchtefühler 8 ist in der Wandung des Messzylinders 6 angebracht und befindet sich ausserhalb des Schiebebereiches des Kolbens 7. Der Kolben 7 wird von einem - nicht dargestellten - linearen Elektromotor angetrieben. Die Bewegungen der Fördergabel 4 und des Kolbens 7 werden von einer - nicht dargestellten - elektronischen Schaltung synchronisiert. Die Innenwand des Messzylinders 6 ist an seinem Ende 9 konisch ausgebildet. Zu diesem Zweck kann auch die Halbschale eines längs durchgeschnittenen Zylinders in den Messzylinder 6 eingepresst werden. Dadurch wird verhindert, dass feuchtes Messgut 2 mit einer Wasseraktivität $a_w$ grösser als 0.75 sich im Messzylinder festsetzt. Das konische Ende 9 des Messzylinders 6 mündet in einen Sammelbehälter 10 ein und ist mit einem Abschlussdeckel 11 versehen, der von einer Blattfeder gegen das konische Ende 9 gedrückt wird. Der Kolben 7 und der Abschlussdeckel 11 bewirken, dass das Messgut 2 in einem sehr homogen verteilten Zustand am Feuchtefühler 8 entlang geschoben wird. Der Messzylinder 6 ist von einer elektrischen Heizung umgeben, die aus einer mit Metalldraht durchsetzten Isolationsmatte besteht. Im Hauptzweig 1 ist ein Temperaturfühler 14 vorgesehen, der zusammen mit dem Temperaturfühler zum Feuchtefühler 8 Temperatursignale an eine - hier nicht dargestellte - elektronische Steuerschaltung abgibt. Aufgrund der Differenz der beiden Temperatursignale wird die elektrische Heizung von der Steuerschaltung eingeschaltet. Dabei ist zu bemerken, dass die Temperatur im Hauptzweig 1 stets grösser oder gleich der Temperatur im Nebenzweig ist. Sind die Temperatursignale gleich, so schaltet die elektronische Steuerschaltung die elektrische Heizung 13 wieder aus. Dadurch ist gewährleistet, dass die Messtemperatur stets gleich der Prozesstemperatur ist und reproduzierbare Wasseraktivitätsmessungen im Messzylinder 6 gegeben sind.

Der Sammelkanal 3 kann ein zylindrisches oder rechteckiges Profil haben. In einer Ausführungsform hat der Sammelkanal einen rechteckigen Durchschnitt von 65 x 38 mm. Der Hub des Kolbens 7 im Messzylinder 6 beträgt 300 mm. Der Innendurchmesser des Messzylinders 6 ist 63 mm. Die Hubzeit ist einstellbar von minimal 25 sec. bis zu 25 min. Da die Dimensionen der gesamten Anordnung im Vergleich zu den herkömmlichen Anlagen, z.B. zu der Infrarot- oder Mikrowell-Messmethode, besonders gering sind, ist der Einbau in einen beliebigen Prozess unproblematisch. Die geringen Dimensionen ergeben andererseits einen kleinen Ausstoss an Messgut 2, so dass das Messgut 2 entweder auf einfache Art in den Prozess zurückgeführt oder vollständig darauf verzichtet werden kann. Um den richtigen Funktionsablauf der gesamten Anordnung - insbesondere die Synchronisierung der Bewegungen der Fördergabel 4 und des Kolbens 7 sowie die Hubzeit des Kolbens 7 zu überprüfen und einzustellen, ist eine manuelle Steuerung vorgesehen.

Wie eingangs schon erwähnt, hat sich die Anordnung besonders bewährt bei Schüttgütern, z.B. in verschiedenen Granulier- und Trocknungsanlagen. Der Einsatz der beschriebenen Anordnung ist jedoch nicht darauf beschränkt. Sie wird auch vorteilhaft bei der Wasseraktivitätsmessung in Prozessen mit anderen Feststoffen, z.B. mit mehligen Pulvern, angewandt.

0183643

Bezeichnungsliste

_____

| | |
|---|---|
| 1 | Hauptzweig des Prozesses |
| 2 | Prozessgut, Messgut |
| 3 | Sammelkanal |
| 4 | Fördergabel |
| 5 | exzentrischer Antrieb |
| 6 | Messzylinder |
| 7 | verschiebbarer Kolben |
| 8 | Feuchtefühler |
| 9 | konisches Ende |
| 10 | Sammelbehälter |
| 11 | Abschlussdeckel |
| 12 | Blattfeder |
| 13 | elektrische Heizung |
| 14 | Temperaturfühler |

Patentansprüche

---

1. Anordnung zur Messung der Wasseraktivität an Schüttgütern oder sonstigen Feststoffen (2) in kontinuierlichen oder chargenweisen Prozessen mittels eines Feuchtefühlers (8), d a d u r c h   g e k e n n z e i c h n e t , dass die Anordnung als Nebenzweig des Prozesses vorgesehen ist und im wesentlichen aus einem auf einem Messzylinder (6) stehenden Sammelkanal (3) besteht, wobei im Messzylinder (6) ein verschiebbarer Kolben (7) und in dessen Wandung der Feuchtefühler (8) vorgesehen ist, derart, dass dieser sich ausserhalb des Schiebereiches des Kolbens (7) befindet.

2. Anordnung nach Anspruch 1, d a d u r c h   g e k e n n z e i c h n e t, dass der Feuchtefühler (8) ein Leitfähigkeitsfühler ist.

3. Anordnung nach einem der Ansprüche 1 oder 2, d a d u r c h   g e k e n n z e i c h n e t, dass im Sammelkanal (3) mindestens eine bewegbare Fördergabel (4) angebracht ist, die von einem exzentrischen Antrieb (5) derart angetrieben ist, dass die Fördergabel (4) sich in ihrer Ruhelage ausserhalb der inneren Wandung des Sammelkanals (3) befindet.

4. Anordnung nach einem der Ansprüche 1 bis 3, d a d u r c h   g e k e n n z e i c h n e t, dass die Innenwand des Messzylinders (6) ausserhalb des Schiebebereiches des Kolbens (7) ein konisches Ende (9) aufweist.

5. Anordnung nach einem der Ansprüche 1 bis 4, d a d u r c h   g e k e n n z e i c h n e t, dass am Ende des Messzylinders (6) ein Abschlussdeckel (11) vorgesehen ist, der von einer Blattfeder (12) gegen den Messzylinder (6) gehalten ist.

WDI-07.84

6. Anordnung nach einem der Ansprüche 1 bis 5, d a d u r c h   g e k e n n z e i c h n e t, dass der Messzylinder (6) von einer regelbaren elektrischen Heizung umgeben ist.

7. Anordnung nach Anspruch 6, d a d u r c h g e k e n n z e i c h n e t, dass im Hauptzweig des Prozesses und im Messzylinder (6) sich je ein Temperaturfühler (8, 14) befindet und das eine elektronische Schaltung vorgesehen ist, die aufgrund der Temperatursignale der beiden Temperaturfühler (8, 14) die elektrische Heizung ein- und ausschaltet.

0183643

Fig. 1

0183643

Europäisches
Patentamt

**EUROPÄISCHER RECHERCHENBERICHT**

Nummer der Anmeldung

EP  85 81 0491

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 270 279  (S.G. JACKSON et al.)<br>*  Spalte 1, Zeile 71 - Spalte 2, Zeile 3;  Spalte 2, Zeile 66 - Spalte 3, Zeile 38;  Spalte 4, Zeilen 15-27;  Spalte 5, Zeilen 25-40; Figuren 2,3; Ansprüche 1,4 * | 1,2,4 | G 01 N    1/20<br>G 01 N   27/04 |
| A | US-A-3 339 700  (D.G. WELLS)<br>*  Spalte 1, Zeilen 52-59; Spalte 2, Zeilen 25-54;  Figur 1 * | 3 | |
| A | US-A-2 836 069  (S.E. SHIELDS et al.)<br>* Spalte 4, Zeilen 1-6; Spalte 6, Zeilen 36-56; Figuren 1,9 * | 6 | |
| | --- | | RECHERCHIERTE SACHGEBIETE (Int Cl 4) |
| A | CH-A-  471 383   (SINA AG) | | G 01 N    1/00<br>G 01 N   33/00<br>G 01 N   27/00 |
| A | DE-A-2 357 062  (ULRICH WALTER MASCHINEN GmbH) | | |

Der vorliegende Recherchenbericht wurde für alle Patentansprüche erstellt

| Recherchenort | Abschlußdatum der Recherche | Prüfer |
|---|---|---|
| DEN HAAG | 20-01-1986 | FORMBY N.M. |